# EUROPEAN PATENT SPECIFICATION

(11) **EP 2 492 194 B1**
(45) Date of publication and mention of the grant of the patent: **04.06.2014**
(21) Application number: 11001544.3
(22) Date of filing: 24.02.2011
(51) Int. Cl.: B64D 11/00

(54) **Overhead baggage compartment**
Überkopf-Gepäckfach
Soute à bagages aérienne

(43) Date of publication of application: 29.08.2012
(73) Proprietor: THK CO., LTD., Tokyo 141-8503 (JP); THK, GmbH, 40878 Ratingen (DE)
(72) Inventor: Hosaka, Eiji, Tokyo 141-8503 (JP)
(74) Representative: Feldkamp, Rainer

(56) References cited:
- EP-A1- 1 216 920
- DE-A1- 19 946 629

## Description

This invention relates to an overhead baggage compartment for passenger vehicles, especially aircraft, said baggage compartment comprising a housing secured by mounting means to a roof region of the vehicle; and a baggage bin mounted to said housing by guide means for a movement from an upper closed position within the housing to a lowered position wherein the inner space of the baggage bin is accessible; said housing comprising a rear wall and side plates , and said baggage bin comprising side boards, a bottom board and a back board.

Overhead baggage compartments for commercial aircraft which are mounted to a housing structure by guide means for a movement from an upper closed position within the housing structure to a lowered position wherein the inner space of the baggage bin is accessible, are known for instance from US-A-5,244,269 and US-A-5,129,597. These known baggage compartments generally comprise complicated and space consuming lever and guide arrangements of substantial weight which is especially undesirable for use in aircraft.

Document EP 1 216 920, which discloses all the features of the preamble of claim 1, is considered to be the closest prior art.

It is an object of the present invention to provide an overhead baggage compartment for passenger vehicles, especially aircraft, which has a simple and reliable design and operation and at the same time reduces the weight and space requirement characteristics thereof.

According to the present invention, an overhead baggage compartment of the type mentioned above is provided, wherein:
the guide means comprise linear motion arcuate guides mounted between adjacent side boards and side plates of the baggage bin and the housing, respectively; and a stabilizing arcuate guide means in parallel to said arcuate guides for limiting the movement of the baggage bin to a movement parallel to its vertical and horizontal planes,
said linear motion arcuate guides comprising arcuate guide rails mounted to one of the side plates or the side boards, and a bearing blocks pivotably mounted to the other of the side plates or the side boards, respectively, and guided by said guide rails; and
an articulated lever arrangement acting on said bearing blocks and actuated by an actuating means adapted to move said baggage bin between said upper and lower positions thereof.

The overhead baggage compartment according to the present invention has a simple and reliable design and operation, since all forces and the weight of the baggage contained therein is borne by linear motion arcuate guides which are commercially available and have a high load bearing capacity with small dimensions and permit a soft clearance-free, highly accurate circular motion as opposed to sliding guides or cam followers or lever arrangements. At the same time, the weight and space requirement characteristics thereof are reduced. This permits to realize a backlash-free, cost-effective and accurate movement. The bearing block and the guide rails form a compact unit and are easily to assemble and to mount to the baggage compartment housing and the baggage bin by simple bolt means..

According to a preferred embodiment, said stabilizing arcuate guide means comprise cam tracks formed in one of the housing side plates or the bin side boards radially outwardly from said linear motion circular guides, and cam followers mounted to the other of the side plates or the bin side boards, respectively. Preferably, the cam tracks are formed by slots milled into the housing side plates, whereas the cam follower is mounted to the side boards of the baggage bin.

The articulated lever arrangement comprises preferably a angled first lever having a first end pivotally mounted via a first piviot pin to said bearing block and a second end pivotally mounted via a second piviot pin to a first end of a second lever having a second end mounted to a shaft rotatably supported in said housing side plates and adapted be driven in rotation by said actuating means. Since this lever arrangement does not have to support any substantial load, it may be of lightweight construction.

The articulated lever arrangement comprising said angled first lever and said second lever preferably forms an over-center crank link arrangement having a latching position corresponding to the upper position of said baggage bin. In this manner, the baggage bin is safely latched in its closed upper position.

Spring means are preferably disposed between the baggage compartment housing and the baggage bin and adapted to support part of the weight of the baggage bin and the baggage contained therein.

Preferably, an articulated lever arrangement is disposed on both ends of said housing, the second levers being secured to respective end portions of said shaft and are rotatably driven thereby, so that a uniform movement of the baggage bin may be ensured.

Further, at least one first gear may be secured to said shaft and adapted to mesh with at least one second gear rotatably mounted to at least one of the housing side plates and adapted to be driven in rotation by said actuating means.

These actuating means may comprise in one embodiment an elongated handle having a first end fixed in rotation to said second gear, and a second end extending to a front end of said baggage bin and in a convenient position to be grasped by a user for moving the baggage bin between its upper and lower positions. Releasable latching means may provided between said elongated handle and an adjacent edge portion of said housing side plates to secure the handle in its non-operative position.

In an other embodiment, said actuating means may comprise electric, pneumatic or hydraulic motor means adapted to drive said second gear over a predetermined angle.

For ensuring a jolt-free operation, said shaft may be provided with a damper cam adapted to coact in first and second upper and lower end positions of said baggage bin with adjustable elastic abutment means.

Said arcuate guide rails preferably each comprise four rows of raceways precision-ground on an linear motion rail, and said bearing blocks may comprise end plates allowing corresponding rows of balls within said bearing block to circulate therein. This allows a clearance-free, highly accurate circular motion as opposed to sliding guides or cam followers and results in a high load bearing capacity with concomittant low weight.

Non-limiting embodiments of the present invention are described below with reference to the enclosed drawings, wherein:
Fig. 1 shows a schematic side view of an embodiment of the overhead baggage compartment with the baggage bin in the upper position thereof:
Fig. 2 shows a schematic side view of the embodiment of the overhead baggage compartment of Fig. 1 with the baggage bin in the lowered position thereof:
Fig. 3 shows a schematic front view of the embodiment of the overhead baggage compartment of Figs. 1 and 2;
Fig. 4 shows an embodiment of the linear motion arcuate guide used in the embodiments of Figs. 1 to 3;
Fig. 5 shows a diagram for explaining the forces acting on linear motion arcuate guide of Fig. 4.

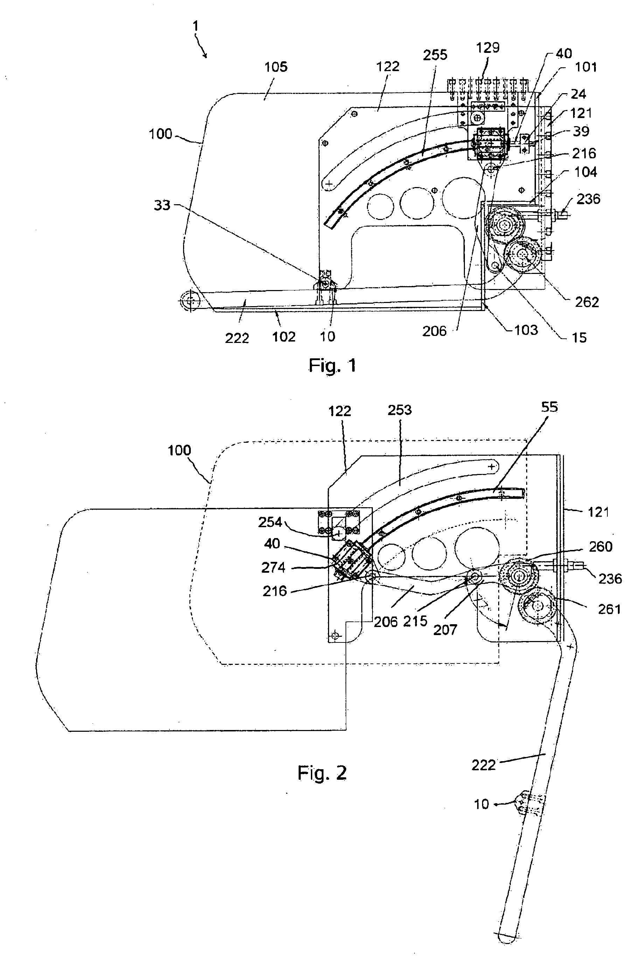

In Fig. 1, an embodiment of an overhead baggage compartment 1 according to the invention for passenger vehicles, especially aircraft, is shown in a schematic manner, wherein the baggage bin is shown in its upper position.

The baggage compartment comprise a housing generally designated by 120 secured by mounting means 129 to a roof region of the vehicle (not shown), and the baggage bin 100 is mounted to said housing 120 by guide means generally designated with 200 for a movement between an upper closed position within the housing 120, and a lowered position wherein the inner space of the baggage bin is accessible.

The housing 120 comprises a rear wall 121 and side plates 122, 123, and said baggage bin 100 comprises side boards 105, a bottom board 102 and a back board 101 covering actutating means described below.;

The guide means 200 comprise linear motion arcuate guides 255, 256 mounted between adjacent side boards 105 and side plates 122,123 of the baggage bin 100 and the housing 120, respectively.

Stabilizing arcuate guide means 253, 254 in parallel to said circular guides 255, 256 are provided for limiting the movement of the baggage bin 100 to a movement parallel to its vertical and horizontal planes, thereby preventing and tilting movement of the baggage bin.

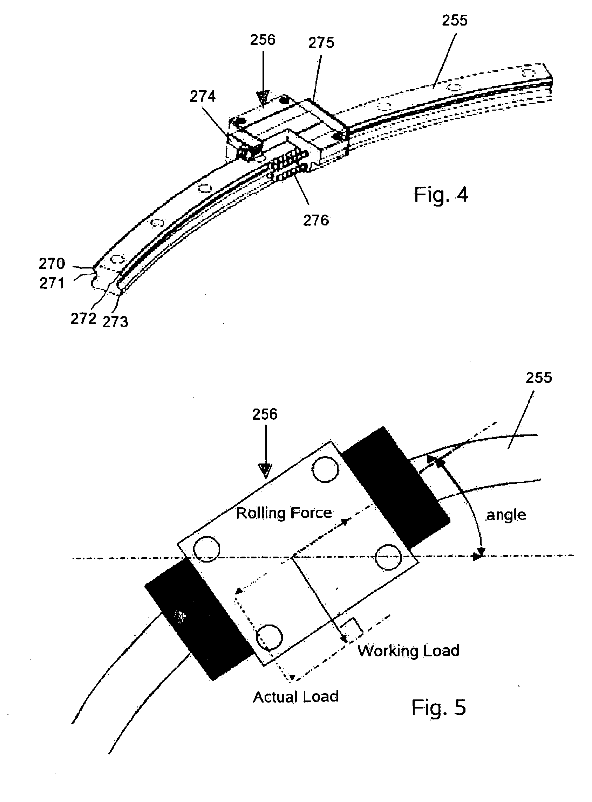

The linear motion arcuate guides 255, 256 comprise arcuate guide rails 255 mounted to the side plates 122, 123 of the housing 120, and bearing blocks 256 pivotably mounted to the side boards (105) of the baggage bin 100 and guided by said guide rails 255. These linear motion arcuate guides 255, 256 will be described below in detail with reference to Figs. 4 and 5.

The stabilizing arcuate guide means 253, 254 comprise cam tracks 253 formed in the housing side plates 122, 123 radially outwardly from said linear motion circular guides 255, 256, and cam followers 254 are mounted to the side boards 105 of the baggage bin 100 via supports 13.

An articulated lever arrangement 206, 207 acting on said bearing blocks 256 is actuated by an actuating means 222 adapted to move said baggage bin 100 between said upper and lower positions thereof.

This articulated lever arrangement 206, 207 comprises an angled first lever 206 having a first end pivotally mounted via a first piviot pin 216 to said bearing block 256 and a second end pivotally mounted via a second piviot pin 215 to a first end of a second lever 207 having a second end mounted to a shaft 221 rotatably supported in said housing side plates 122, 123 and adapted be driven in rotation by the actuating means 222.

The axes of said first and second pivot pins 216, 215 on said first lever are spaced by a first distance and the axis of said shaft 221 is spaced from the axis of said second pivot pin 215 by a second distance. The axis of said shaft 221 further is supported at a position spaced in horizontal direction from a lower end of said arcuate guides 255, 256 by a distance corresponding substantially to the sum of the said first and second distances, and from an upper end of said arcuate guides 255, 256 by a distance in vertical direction corresponding substantially to the difference of said first and second distances. Therefore, considering a rotation of the second lever 207 from the position shown in Fig.2, wherein the second lever extends substantially horizontally from shaft 221 in a direction towards the lower end of said arcuate guide 255, to a position shown in Fig. 1 wherein the second lever extends substantially vertically from shaft 221 in a downward direction, this results to an upward movement of the bearing blocks in view of the decreasing distance between the axis of shaft 221 and the guide rail 255 in a direction towards the upper end thereof.

The articulated lever arrangement 206, 207 comprising the angled first lever 206 and the second lever 207 preferably forms an over-center crank link arrangement having a latching position corresponding to the upper position of said baggage bin 100 as shown in Fig. 1. Only an intentional rotation of shaft 221 results in a movement of the first and second levers 206, 207 out of this self-latching position for lowering the baggage bin 100.

The articulated lever arrangement 206, 207 is preferably disposed on both ends of said housing 120, so that second levers 207 are secured to respective end portions of said shaft 221 and are rotatably driven thereby.

For actuating the shaft 221 and the lever arrangement 206, 207, at least one first gear 260 is secured to said shaft 221 and adapted to mesh with at least one second gear 261 rotatably mounted to a shaft 262 fixed to at least one of the housing side plates 122, 123 and adapted to be driven in rotation by actuating means 222.

In the embodiment shown in Figs. 1 to 3, the actuating means 222 comprise an elongated handle 222 having a first end fixed in rotation to said second gear 261, and a second end extending to a front end of said baggage bin 100, as shown in Fig. 1. Releasable latching means 10, 33 are provided between said elongated handle 222 and an adjacent edge portion of said housing side plates 122, 123 to prevent an accidential movement of the handle 222.

In an other embodiment (not shown), the actuating means 222 may comprise electric, pneumatic or hydraulic motor means adapted to drive said second gear 261 over a predetermined angle. Motor control button switches may be provided in this embodiment at the baggage compartment.

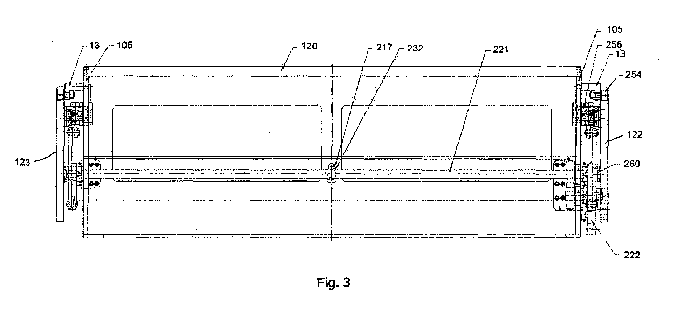

The shaft 221 is provided with a damper cam 217 shown in Fig. 3 and adapted to coact in first and second upper and lower end positions of the baggage bin 100 with adjustable elastic abutment means 236 shown in Fiigs. 1 and 2, thereby ensuring a jolt-free movement of the baggage bin into the end positions thereof.

In Fig. 4, an embodiment of an arcuate guide rails 255 is shown.

Such arcuate guide rails are commercially available from the applicant of the present application and comprise four rows of raceways 270, 271, 272, 273 precision-ground on a linear motion rail 255, and bearing blocks 256 which comprise end plates 274, 275 allowing corresponding rows of balls (276) within said bearing block 256 to circulate therein and to roll on the raceways 270, 271, 272, 273.

These arcuate guide rails and bearing blocks allow a clearance-free, highly accurate arcuate motion as opposed to sliding guides or cam followers. This arrangement constitutes a low weight compact device which easily may be assembled by simply by mounting the rail and bearing blocks with bolts to the side walls of the housing 120 and the side boards of the baggage bin 100.

Thus, the structure is simplified. In contrast to conventional solutions with sliding guides or supporting rolls or levers, a simple assembly is possible and results in a backlash-free, cost-effective support and accurate movement of the baggage bin 100. The bearing blocks and guide rails form a compact unit and are easily to assemble with bolts.

Fig. 5 shows a diagram of the forces acting on the arcuate guide rails and bearing blocks. The lever arrangement 206, 207 exerts an actuation force substantially in the direction of the working load shown in Fig. 5. This actuation force is transformed into a rolling force along the guide rail 255 resulting in a friction-less movement of the bearing block 256 along the guide rail 255.

To avoid undue efforts on raising the baggage bin to the upper position by means of the handle, spring means 40 (only schematically shown in the drawings) are disposed for example between spring pin holders 24 on the baggage compartment housing 120 and the bearing blocks 256 on the baggage bin 100. These springs are adapted to support at least part of the weight of the baggage bin 100 and the baggage contained therein.

## Claims

1. Overhead baggage compartment (1) for passenger vehicles, especially aircraft, said baggage compartment comprising a housing (120) secured by mounting means to a roof region of the vehicle; and a baggage bin (100) mounted to said housing (120) by guide means (200) for a movement from an upper closed position within the housing (120) to a lowered position wherein the inner space of the baggage bin is accessible; said housing comprising a rear wall (121) and side plates (122, 123), and said baggage bin (100) comprising side boards (105), a bottom board (102) and a back board (101);
wherein:
the guide means (200) comprise linear motion arcuate guides (255, 256) mounted between adjacent side boards (105) and side plates (122,123) of the baggage bin (100) and the housing (120), respectively; and a stabilizing arcuate guide means 253, 254) in parallel to said arcuate guides (255, 256) for limiting the movement of the baggage bin (100) to a movement parallel to its vertical and horizontal planes,
said linear motion arcuate guides (255, 256) comprising arcuate guide rails (255) mounted to one of the side plates (122, 123) or the side boards (105), and bearing blocks (256) pivotably mounted to the other of the side plates (122, 123) or the side boards (105), respectively, and guided by said guide rails (255); and **characterised in that** it comprises
an articulated lever arrangement (206, 207) acting on said bearing blocks (256) and actuated by an actuating means (222) adapted to move said baggage bin (100) between said upper and lower positions thereof.

2. A baggage compartment (1) as claimed in claim 1, wherein said stabilizing arcuate guide means (253, 254) comprise cam tracks (253) formed in one of the housing side plates (122, 123) or the bin side boards (105) radially outwardly from said linear motion circular guides (255, 256), and cam followers (254) mounted to the other of the side plates (122, 123) or the side boards (105), respectively.

3. A baggage compartment (1) as claimed in claim 1 or 2, wherein said articulated lever arrangement (206, 207) comprises an angled first lever (206) having a first end pivotally mounted via a first piviot pin (216) to said bearing block (256) and a second end pivotally mounted via a second piviot pin (215) to a first end of a second lever (207) having a second end mounted to a shaft (221) rotatably supported in said housing side plates (122, 123) and adapted be driven in rotation by said actuating means (222), the axes of said first and second pivot pins (216, 215) on said first lever being spaced by a first distance and the axis of said shaft (221) being spaced from the axis of said second pivot pin (215) by a second distance, said axis of said shaft (221) being positioned at a position spaced in horizontal direction from a lower end of said arcuate guides (255, 256) by a distance corresponding substantially to the sum of the said first and second distances and from an upper end of said arcuate guides (255, 256) by a distance in vertical direction corresponding substantially to the difference of said first and second distances

4. A baggage compartment (1) as claimed in claim 3, wherein said articulated lever arrangement (206, 207) comprising said angled first lever (206) and said second lever (207) forms an over-center crank link arrangement having a latching position corresponding to the upper position of said baggage bin (100).

5. A baggage compartment (1) as claimed in claim 3 or 4, wherein an articulated lever arrangement (206, 207) is disposed on both ends of said housing (120), the second levers (207) being secured to respective end portions of said shaft (221) and are rotatably driven thereby.

6. A baggage compartment (1) as claimed in any of the claims 3 to 5, wherein at least one first gear (260) is secured to said shaft (221) and adapted to mesh with at least one second gear (261) rotatably mounted to at least one of the housing side plates (122, 123) and adapted to be driven in rotation by said actuating means (222).

7. A baggage compartment (1) as claimed in claim 6, wherein said actuating means (222) comprise an elongated handle (222) having a first end fixed in rotation to said second gear (261), and a second end extending to a front end of said baggage bin (100).

8. A baggage compartment (1) as claimed in claim 7, wherein releasable latching means are provided between said elongated handle (222) and an adjacent edge portion of said housing side plates (122, 123).

9. A baggage compartment (1) as claimed in claim 6, wherein said actuating means (222) comprise electric, pneumatic or hydraulic motor means adapted to drive said second gear (261) over a predetermined angle.

10. A baggage compartment (1) as claimed in any of the claims 5 to 9, wherein said shaft (221) is provided with a damper cam (217) adapted to coact in first and second upper and lower end positions of said baggage bin (100) with adjustable elastic abutment means (236).

11. A baggage compartment (1) as claimed in any of the preceding claims, wherein said arcuate guide rails (255) each comprise four rows of raceways (270, 271, 272, 273) precision-ground on an linear motion rail (255), and said bearing blocks (256) comprise end plates (274, 275) allowing corresponding rows of balls (276) within said bearing block (256) to circulate therein.

12. A baggage compartment (1) as claimed in any of the preceding claims, wherein spring means are disposed between the baggage compartment housing (120) and the baggage bin (100) adapted to support part of the weight of the baggage bin (100) and the baggage contained therein.

## Patentansprüche

1. Überkopf-Gepäckablage (1) für Passagierfahrzeuge, insbesondere Luftfahrzeuge, wobei die Gepäckablage ein Gehäuse (120), das durch Befestigungseinrichtungen an einem Dachbereich des Fahrzeuges befestigt ist, und ein Gepäckfach (100) umfasst, das an dem Gehäuse (120) durch Führungseinrichtungen (200) für eine Bewegung von einer oberen geschlossenen Position in dem Gehäuse (120) auf eine abgesenkte Position befestigt ist, in der der Innenraum des Gepäckfaches zugänglich ist, wobei das Gehäuse eine Rückwand (112) und Seitenplatten (122, 123) aufweist und das Gepäckfach (100) Seitenwände (105), eine Bodenwand (102) und eine Rückwand (101) aufweist;
wobei:
die Führungseinrichtungen (200) bogenförmige Linearbewegungs-Führungen (255, 256), die zwischen benachbarten Seitenwänden (105) und Seitenplatten (122, 123) des Gepäckfaches (100) bzw. des Gehäuses (120) befestigt sind; und eine bogenförmige Stabilisierungs-Führungseinrichtung (253, 254) parallel zu den bogenförmigen Führungen (255, 256) zur Beschränkung der Bewegung des Gepäckfaches (100) auf eine Bewegung parallel zu deren vertikalen und horizontalen Ebenen umfasst,
wobei die bogenförmigen Linearbewegungs-Führungen (255, 256) bogenförmige Führungsschienen (255), die an einer von den Seitenplatten (122, 123) oder den Seitenwänden (105) befestigt sind, und Lagerblöcke (256) umfassen, die schwenkbar an der anderen von den Seitenplatten (122, 123) oder den Seitenwänden (105) befestigt und durch die Führungsschienen (255) geführt sind; und
**dadurch gekennzeichnet, dass** die Gepäckablage Folgendes umfasst:
eine bogenförmige Hebeanordnung (206, 207), die auf die Lagerblöcke (256) einwirkt und durch eine Betätigungseinrichtung (222) betätigt wird, die zur Bewegung des Gepäckfaches (100) zwischen dessen oberen und unteren Positionen ausgebildet sind.

2. Gepäckablage (1) nach Anspruch 1, bei dem die bogenförmigen Stabilisierungs-Führungseinrichtungen (253, 254) Nockenbahnen (253), die in einer von den Gehäuse-Seitenplatten (122, 123) oder den Gepäckfach-Seitenwänden (105) radial außenliegend von den kreisförmigen Linearbewegungs-Führungen (255, 256) ausgebildet sind, und Nockenfolger (254) umfassen, die an den anderen von den Seitenplatten (122, 123) oder Seitenwänden (105) befestigt sind.

3. Gepäckablage (1) nach Anspruch 1 oder 2, bei dem die Gelenkhebel-Anordnung (206, 207) einen abgewinkelten ersten Hebel (206) mit einem ersten Ende, das über einen ersten Schwenkbolzen (216) an dem Lagerblock (256) befestigt ist, und einem zweiten Ende aufweist, das über einen zweiten Schwenkbolzen (215) an einem ersten Ende eines zweiten Hebels (207) befestigt ist, der ein zweites Ende aufweist, das an einer Welle (221) befestigt ist, die drehbar in den Gehäuse-Seitenplatten (122, 123) gehaltert und für einen Drehantrieb durch die Betätigungseinrichtungen (222) ausgebildet ist, wobei die Achsen der ersten und zweiten Schwenkbolzen (216, 215) auf dem ersten Hebel durch einen ersten Abstand voneinander getrennt sind und die Achse der Welle (221) einen zweiten Abstand von der Achse des zweiten Schwenkbolzens (215) getrennt sind, wobei die Achse der Welle (221) an einer Position angeordnet ist, die in horizontaler Richtung in einem Abstand von einem unteren Ende der bogenförmigen Führungen (255, 256) angeordnet ist, der im Wesentlichen der Summe der ersten und zweiten Abstände entspricht, und die in vertikaler Richtung in einem Abstand von einem oberen Ende der bogenförmigen Führungen (255, 256) angeordnet ist, der im Wesentlichen der Differenz zwischen den ersten und zweiten Abständen entspricht.

4. Gepäckablage (1) nach Anspruch 3, bei der die Gelenkhebel-Anordnung (206, 207) einen abgewinkelten ersten Hebel (206) umfasst und der zweite Hebel (207) eine Sprungwerk-Anordnung mit einer Verriegelungsposition bildet, die der oberen Position des Gepäckfaches entspricht.

5. Gepäckablage (1) nach Anspruch 3 oder 4, bei der eine Gelenkhebel-Anordnung (206, 207) an beiden Enden des Gehäuses (120) angeordnet ist, wobei die zweiten Hebel (207) an jeweiligen Endpositionen der Welle (221) befestigt sind und durch diese in Drehung angetrieben werden.

6. Gepäckablage (1) nach einem der Ansprüche 3 bis 5, bei der zumindest ein Zahnrad (260) an der Welle (221) befestigt und zum Kämmen mit zumindest einem zweiten Zahnrad (261) ausgebildet ist, das an zumindest einer der Gehäuse-Seitenplatten (122, 123) befestigt und für einen Drehantrieb durch die Betätigungseinrichtungen (222) ausgebildet ist.

7. Gepäckablage (1) nach Anspruch 6, bei der die Betätigungseinrichtungen (222) einen langgestreckten Handgriff (222) mit einem ersten Ende, das drehfest an dem zweiten Zahnrad (261) befestigt ist, und mit einem zweiten Ende umfassen, das sich zu einem vorderen Ende des Gepäckfaches (100) erstreckt.

8. Gepäckablage (1) nach Anspruch 7, bei der lösbare Verriegelungseinrichtungen zwischen dem langgestreckten Hebel (222) und einem benachbarten Kantenteil der Gehäuse-Seitenplatten (122, 123) vorgesehen sind.

9. Gepäckablage (1) nach Anspruch 6, bei der die Betätigungseinrichtungen (222) elektrische, pneumatische oder hydraulische Motoreinrichtungen umfassen, die zum Antrieb des zweiten Zahnrades (261) über einen vorgegebenen Winkel ausgebildet sind.

10. Gepäckablage (1) nach einem der Ansprüche 5 bis 9, bei der die Welle (221) mit einem Dämpfungsnocken (217) versehen ist, der in ersten und zweiten oberen und unteren Endpositionen des Gepäckfaches zum Zusammenwirken mit einstellbaren elastischen Anschlageinrichtungen (236) ausgebildet ist.

11. Gepäckablage (1) nach einem der vorhergehenden Ansprüche, bei der die bogenförmigen Führungsschienen (255) jeweils vier Reihen von Laufbahnen (270, 271, 272, 273) umfassen, die auf einer Linearbewegungs-Schiene (255) mit Präzision geschliffen sind, und die Lagerblöcke (256) Endplatten (274, 275) umfassen, die den Umlauf entsprechender Reihen von Kugeln (276) in dem Lagerblock (256) ermöglichen.

12. Gepäckablage (1) nach einem der vorhergehenden Ansprüche, bei der Federeinrichtungen zwischen dem Gepäckablage-Gehäuse (120) und dem Gepäckfach (100) angeordnet und zur Abstützung eines Teils des Gewichtes des Gepäckfaches (100) und des darin enthaltenen Gepäcks ausgebildet sind.

## Revendications

1. Soute à bagages aérienne (1) pour véhicules de transport de passagers, en particulier un aéronef, ladite soute à bagages comprenant un caisson (120) fixé par un moyen de montage à une région de plafond du véhicule, et une corbeille à bagages (100) montée sur ledit caisson (120) par un moyen de guidage (200) pour un mouvement à partir d'une position fermée supérieure dans le caisson (120) vers une position abaissée dans laquelle l'espace intérieur de la corbeille à bagages est accessible, ledit caisson comprenant une paroi arrière (121) et des plaques latérales (122, 123), et ladite corbeille à bagages (100) comprenant des planches latérales (105), une planche de fond (102) et une planche arrière (101),
dans laquelle :
le moyen de guidage (200) comprend des guides courbes de mouvement linéaire (255, 256) montés entre les planches latérales (105) adjacentes et les plaques latérales (122, 123) de la corbeille à bagages (100) et le caisson (120), respectivement, et des moyens de guidage courbes de stabilisation (253, 254) parallèles auxdits guides courbes (255, 256) pour limiter le mouvement de la corbeille à bagages (100) à un mouvement parallèle à son plan vertical et à son plan horizontal,
lesdits guides courbes de mouvement linéaire (255, 256) comprenant des rails de guidage courbes (255) montés sur l'une des plaques latérales (122, 123) ou des planches latérales (105), et des blocs d'appui (256) montés avec possibilité de pivotement sur l'autre des plaques latérales (122, 123) ou des planches latérales (105), respectivement, et guidés par lesdits rails de guidage courbes (255), et **caractérisée en ce qu'**elle comprend
un agencement de levier articulé (206, 207) agissant sur lesdits blocs d'appui (256) et actionné par un moyen d'actionnement (222) conçu pour déplacer ladite corbeille à bagages (100) entre sa position supérieure et sa position inférieure.

2. Soute à bagages (1) selon la revendication 1, dans laquelle lesdits moyens de guidage courbes de stabilisation (253, 254) comprennent des rampes de guidage (253) formées dans l'une des plaques latérales de caisson (122, 123) ou des planches latérales de corbeille (105) radialement vers l'extérieur par rapport auxdits guides circulaires de mouvement linéaire (255, 256), et des galets (254) montés sur l'autre des plaques latérales (122, 123) ou des planches latérales (105), respectivement.

3. Soute à bagages (1) selon la revendication 1 ou 2, dans laquelle ledit agencement de levier articulé (206, 207) comprend un premier levier incliné (206) ayant une première extrémité montée avec possibilité de pivotement par le biais d'un premier pivot (216) sur ledit bloc d'appui (256) et une deuxième extrémité montée avec possibilité de pivotement par le biais d'un deuxième pivot (215) sur une première extrémité d'un deuxième levier (207) ayant une deuxième extrémité montée sur un arbre (221) supporté avec possibilité de rotation dans lesdites plaques latérales de caisson (122, 123) et conçu pour être entraîné en rotation par ledit moyen d'actionnement (222), les axes desdits premier et deuxième pivots (216, 215) sur ledit premier levier étant écartés d'une première distance et l'axe dudit arbre (221) étant écarté par rapport à l'axe dudit deuxième pivot (215) par une deuxième distance, ledit axe dudit arbre (221) étant positionné à une position écartée dans une direction horizontale par rapport à une extrémité inférieure desdits guides courbes (255, 256) par une distance correspondant globalement à la somme desdites première et deuxième distances et par rapport à une extrémité supérieure desdits guides courbes (255, 256) par une distance dans une direction verticale correspondant globalement à la différence desdites première et deuxième distances.

4. Soute à bagages (1) selon la revendication 3, dans laquelle ledit agencement de levier articulé (206, 207) comprenant ledit premier levier incliné (206) et ledit deuxième levier (207) forme un agencement de liaison de manivelle de décentrage ayant une position de verrouillage correspondant à la position supérieure de ladite corbeille à bagages (100).

5. Soute à bagages (1) selon la revendication 3 ou 4, dans laquelle un agencement de levier articulé (206, 207) est disposé sur les deux extrémités dudit caisson (120), les deuxièmes leviers (207) étant fixés à des parties d'extrémités respectives dudit arbre (221) et sont entraînés en rotation de cette manière.

6. Soute à bagages (1) selon l'une quelconque des revendications 3 à 5, dans laquelle au moins un premier engrenage (260) est fixé audit arbre (221) et conçu pour s'engrener avec au moins un deuxième engrenage (261) monté avec possibilité de rotation sur au moins l'une des plaques latérales de caisson (122, 123) et conçu pour être entraîné en rotation par ledit moyen d'actionnement (222).

7. Soute à bagages (1) selon la revendication 6, dans laquelle ledit moyen d'actionnement (222) comprend une poignée allongée (222) ayant une première extrémité fixée en rotation audit deuxième engrenage (261), et une deuxième extrémité s'étendant jusqu'à une extrémité avant de ladite corbeille à bagages (100).

8. Soute à bagages (1) selon la revendication 7, dans laquelle un moyen de verrouillage libérable est prévu entre ladite poignée allongée (222) et une partie de bord adjacente desdites plaque latérales de caisson (122, 123).

9. Soute à bagages (1) selon la revendication 6, dans laquelle ledit moyen d'actionnement (222) comprend un moyen à moteur électrique, pneumatique ou hydraulique conçu pour entraîner ledit deuxième engrenage (261) sur un angle prédéterminé.

10. Soute à bagages (1) selon l'une quelconque des revendications 5 à 9, dans laquelle ledit arbre (221) est doté d'une came d'amortissement (217) conçue pour interagir dans les première et deuxième positions d'extrémités supérieure et inférieure de ladite corbeille à bagages (100) avec un moyen de butée élastique ajustable (236)

11. Soute à bagages (1) selon l'une quelconque des revendications précédentes, dans lequel lesdits rails de guidage courbes (255) comprennent chacun quatre rangées de chemins (270, 271, 272, 273) positionnées avec précision sur un rail de mouvement linéaire (255), et lesdits blocs d'appui (256) comprennent des plaques d'extrémités (274, 275) recevant des rangées correspondantes de billes (276) dans ledit bloc d'appui (256) pour circuler dans celui-ci.

12. Soute à bagages (1) selon l'une quelconque des revendications précédentes, dans lequel un moyen de ressort est disposé entre le caisson de soute à bagages (120) et la corbeille à bagages (100) conçu pour supporter une partie du poids de la corbeille à bagages (100) et des bagages contenus dans celle-ci.
